# EUROPEAN PATENT APPLICATION

(11) **EP 4 660 866 A1**
(43) Date of publication of application: **10.12.2025**
(21) Application number: 24465526.2
(22) Date of filing: 05.06.2024
(51) Int. Cl.: G06F 30/15, G05B 19/418, G06F 16/901, G06F 40/205, G06F 40/56, G06N 5/022, G06N 20/00, H04L 9/32

(54) **COMPUTER-IMPLEMENTED METHOD OF AND DEVICE FOR DESIGNING A TECHNICAL OBJECT**

(71) Applicant: Siemens Aktiengesellschaft, 80333 München (DE)
(72) Inventor: SCHULZ, Gabor, 90766 Fürth (DE); BONNER, Maria, 90491 Nürnberg (DE); BEYER, Dagmar, 80339 München (DE); ZELLER, Marc, 81243 München (DE); SAVU, Ana Maria, 500097 Brasov (RO)
(74) Representative: Siemens Patent Attorneys

(57) **Abstract**

A computer-implemented method of designing a technical object comprises: acquiring a plurality of requirements for the technical object under design; generating a knowledge graph from the acquired plurality of requirements; analysing the generated knowledge graph for completeness and/or consistency; based on a result of said analysing, generating and outputting a number of proposed further requirements e.g. to an operator; if the operator accepts one or more of the proposed further requirements, amending the plurality of requirements with the accepted one or more of the proposed further requirements and repeating at least the analysing step; clearing the plurality of requirements for use in subsequent design and manufacturing of the technical object under the condition that the analysing step indicates completeness and/or consistency of the plurality of requirements.

Manufacturing of technical objects having malfunctions, quality issues or not meeting expectations is prevented.

## Description

The present invention relates to the field of requirements engineering, and more particularly to a computer-implemented method of and a computing device for designing a technical object.

Requirements engineering is a systematic approach to identifying, analysing, documenting, and tracking the requirements of a technical object under design. Herein, a requirement is a singular documented physical or functional need that should be satisfied by the technical object under design (by the result of the engineering process). Such a requirement is written in natural language or in a controlled language variant of natural language. Requirements engineering involves understanding the needs and constraints of stakeholders as well as regulatory constraints, and translating them into a set of clear, concise, and measurable requirements that can be used as a basis for design, development, testing and manufacturing.

Requirements engineering is an essential part of the product development process, as it helps ensure that the final product meets the needs and expectations of its users, and that it is delivered on time, within budget, and with the required quality. Requirements engineering is widely applied in various industries, including automotive, marine, and aviation, where the failure to meet requirements can have severe consequences.

Sometimes, general-purpose document or spreadsheet editors, including Word and Excel etc., are used for requirements engineering.

Also, there are several software tools available for requirements engineering, including Polarion, Teamcenter, DOORS and REUSE. These specialized tools provide features such as guidelines and templates for creating and manage requirements, requirement management, traceability, and reporting, which help streamline the requirements engineering process and ensure that all stakeholders are aligned on the project's requirements.

ISO/IEC/IEEE 29148 is a standard which defines processes as well as formats and required contents of information items produced in the requirements engineering processes in the automotive industry. This standard emphasizes the importance of traceability, consistency, and completeness in requirements engineering, and provides a framework for creating, managing, and verifying requirements.

Requirements typically describe different features of the final product on different level of abstraction and are mostly formalized using natural language. A problem exists in that hitherto it has not been possible to automatically verify whether a set of requirements is consistent and complete, or e.g. if an important feature is still missing. Thus, an engineer cannot be sure that all needed aspects of the final product have been documented as a requirement. Consequently, missing elements or even errors in the subsequent manufacturing process may occur that are hard to solve and create unnecessary delays and cost.

Reference [1] (see list at the end of this specification) discloses an automated tool which allows to establish bi-directional traceable links (1) between requirements and (2) between requirements and model-based designs using Artificial Intelligence.

It is one object of the present invention to improve the process of designing and subsequently manufacturing a technical object.

Under a first aspect, the object is solved by a computer-implemented method of designing a technical object according to the features of claim 1. The method comprises: a) acquiring a plurality of requirements for the technical object under design; b) generating a knowledge graph from the acquired plurality of requirements; c) analysing the generated knowledge graph for completeness and/or consistency; d) based on a result of said analysing in step c), generating and outputting a number of proposed further requirements, for example to an operator; e) if the operator accepts one or more of the proposed further requirements output in step d), amending the plurality of requirements with the accepted one or more of the proposed further requirements and repeating at least step c); f) clearing the plurality of requirements for use in subsequent design and manufacturing of the technical object under the condition that the analysing of step c) indicates completeness and/or consistency of the plurality of requirements.

The proposed method can automatically detect inconsistent or incomplete requirements and may automatically propose further requirements that can be added to make the requirements for a technical object consistent and complete. As such, advantageously, the process of designing a technical object becomes a guided human-machine interaction in which technical means - i.e. a device configured out to carry out the proposed method - ensure that only consistent and complete requirements are cleared for design and manufacturing, thereby preventing problems due to incomplete or inconsistent requirements from occurring during manufacturing. Such problems that can be prevented include the manufacturing of technical objects having malfunctions, quality issues or not meeting client expectations or regulatory requirements, as well as problems that may cause the manufacturing itself to fail due to unmanufacturable designs, and the like.

The term "technical object" may refer to any manufacturable technical object, such as any type of machine, robot, mechanical device or the like, but more particularly may refer to a car, a vessel or an aircraft, for example.

In particular, a "requirement" may describe a singular documented physical or functional need that the technical object under design shall satisfy. A respective "requirement" may be data, in particular text data, and may comprise, for example, natural language, controlled language and/or markup language. A respective "requirement" may specify one or more desired attributes of a specific part of the technical object and/or may specify one or more references or dependencies between specific parts and their requirements. A respective requirement may relate to customer expectations, regulatory constraints, norm-based constraints, safety, and general technical requirements, and the like.

In particular, "acquiring" may relate to any process of obtaining, or making available to the proposed method, the data that is to be acquired, such as the plurality of requirements or the later-explained manufacturing specification. The data that is to be acquired may be received as input from a terminal, or may be received via network, may be fetched from a database, and the like.

A "knowledge graph", in particular, may refer to a structured digital representation of the plurality of requirements in a machine-readable format. A knowledge graph may comprise, conceptually, a plurality of nodes and a plurality of links between the nodes. Herein, a respective node may specify attributes of a specific part of the technical object under design, and a respective link may specify relationships and/or dependencies between respective two specific parts of the technical object. Herein, a pre-defined vocabulary, taxonomy, or ontology can specify the admissible terms and concepts for node types, attributes and relationships and dependencies.

Exemplary methods for automatically generating a knowledge graph from unstructured data such as the plurality requirements are described in reference [2].

In particular, analysing "consistency" may refer to analysing whether all requirements are consistent with each other, whether they do not conflict or contradict each other, and whether they correctly reference each other. More particular, a consistent knowledge graph should only comprise a single cluster in which all nodes are directly or indirectly connected by one or more links. A knowledge graph clustered into two or more clusters that do not reference each other via links is deemed to be inconsistent.

In particular, analysing "completeness" may refer to analysing that all required requirements are present, and that no required requirements have been overlooked. Such an analysis may be performed based on pre-existing ontologies, taxonomies and other pre-existing knowledge pertaining to the technical domain to which the technical object under design belongs.

Generating the proposed further requirements may be performed by locating missing requirements in the pre-existing ontologies, taxonomies and other pre-existing knowledge, and/or by determining missing links, using for example the teachings of reference [1], or any other suitable method that can provide insight into what is missing or what needs to be fixed to make the knowledge graph consistent and complete.

"Outputting" may comprise outputting the further requirements in a human-readable form such that they can be reviewed by the operator or also by another program to check requirements and inconsistencies. The further requirements may be displayed, e.g. in human-readable form on a display device or may be output in machine-readable form via network for being rendered to an operator in human-readable form by an external rendering device if necessary, or the like.

"Amending the plurality of requirements with the accepted one or more of the proposed further requirements" may result in obtaining an amended plurality of requirements that comprises the original plurality of requirements and the accepted one or more proposed further requirements. It is noted that herein, after said amending, the "amended plurality of requirements" may also simply be referred to as "plurality of requirements" for brevity.

That is, in particular, in step f), the term "plurality of requirements" refers to the plurality of requirements acquired in step a) if the plurality of requirements was not amended in step e), and refers to the amended plurality of requirements if the plurality of requirements was amended in step e).

"Clearing the plurality of requirements for use in subsequent design and manufacturing" may, in particular, comprise any step in which it is made sure that only a complete and consistent plurality of requirements will be accepted for manufacturing. As such, "clearing for manufacturing" may comprise adding information about readiness or lacking readiness for manufacturing to the plurality of requirements, may comprise adding a digital, preferably a cryptographic, signature to the plurality of requirements and/or to the information about readiness or lacking readiness for manufacturing, making an entry indicating clearance to a transactional ledger such as a blockchain, or the like.

The term "a number of' refers to a number of one or more.

According to an embodiment, the method further comprises g) acquiring a manufacturing specification of the technical object that has been created based on the plurality of requirements; and h) operating a plant to manufacture the technical object according to the manufacturing specification only if the plurality of requirements have been cleared for use in step f).

That is, thanks to steps a) - e), any problems due to incomplete or inconsistent requirements can advantageously be prevented from occurring during the manufacturing step h).

More particularly, the proposed "method of designing a technical object" may also be referred to as "method of designing and manufacturing a technical object" or "method of manufacturing a technical object".

Whether the manufacturing specification has been created based on the plurality of requirements may be determined, for example, by the plurality of requirements being included in, referencing or being referenced by the manufacturing specification. Cryptography such as digital cryptographic signatures, blockchain or the like may be used to ensure a verifiable link between the manufacturing specification and the plurality of requirements based on which it was created if required.

It is noted that "operating a plant" may also include "causing the plant to operate". That is, operating the plant may be effected either by a computing device that performs the proposed method directly controlling operations of the plant and its various robots and devices, or may be effected by the computing device providing the manufacturing specification to the plant so that a plant controller subsequently operates the plant based on the manufacturing specification.

According to a further embodiment, the requirements comprise one or more of natural language, controlled language, and markup language.

Herein, "controlled language" may refer to natural language that only uses a predefined sub-set of vocabulary and grammar of the natural language. "Markup language" may refer to any markup language, such as XML, SGML, HTML and the like.

That is, the requirements are advantageously human-readable as is (when written in controlled or natural language) or can easily be made human-readable through a markup language renderer, such as a browser (when written in markup language). In particular, markup language may be combined with one or more of natural language and controlled language.

According to a further embodiment, step b) comprises parsing the requirements using an NLP parser.

Use of an NLP parser may advantageously facilitate comprehension of the plurality of requirements and generation of the knowledge graph.

Herein, NLP refers to "Natural Language Processing".

Herein, "NLP parser" refers to functionally implemented as method steps or as a device that may use conventional natural language parsing and/or artificial intelligence-based natural language parsing to identify grammatical concepts, such as subject, predicate, object, and the like, in natural or controlled language, and may, for example, assign subjects and objects to nodes of the knowledge graph.

Step b) may further comprise transforming the output of the NLP parser into the knowledge graph according to an ontology defining a structure of the knowledge graph.

The "ontology" may be a structured representation of meta-knowledge of how to transform NLP parser output into knowledge graphs (i.e. which grammatical elements become nodes, which become links, and the like).

According to a further embodiment, step b) comprises using a trained large language model to generate the knowledge graph from the plurality of requirements.

Accordingly, the capabilities of large language models may facilitate the use of natural language for writing the plurality of requirements and may advantageously further improve a correct understanding of the plurality of requirements by the proposed method.

Large language models, LLM, are discussed in reference [3], and their use for automated generation of knowledge graphs from natural language is described in reference [4].

The trained LLM may operate directly on the plurality of requirements and/or may operate on the output of the NLP parser.

According to a further embodiment, step c) comprises checking consistency of the generated knowledge graph by checking whether the generated knowledge graph comprises a single cluster or a plurality of independent clusters.

When the knowledge graph is clustered into more than one independent cluster, this is a strong indication that some requirements are missing, i.e. that some attributes of some aspects of the technical object are unspecified and/or that some reference between the attributes are unspecified. Thus, advantageously, checking for clustering of the knowledge graph may improve the detection of inconsistency and/or incompleteness of the plurality of requirements.

A "cluster" may refer to a plurality of nodes of the knowledge graph and a plurality of links between the plurality of nodes of the knowledge graph that are self-consistent, i.e. contain no links to external nodes that are not part of the cluster. That is, a plurality of independent clusters is deemed to exist when more than one cluster can be identified and there are no links between the two or more clusters.

According to a further embodiment, step c) comprises checking completeness of the generated knowledge graph by comparing the generated knowledge graph with a predefined knowledge graph.

Thus, advantageously, existing domain knowledge comprised in the predefined knowledge graph can be leveraged to automatically determine missing requirements.

The predefined knowledge graph may be supplied by an external provider. The predefined knowledge graph may be specific to a technical domain to which the technical device belongs. Alternatively, the predefined knowledge graph may be a universal knowledge graph, such as the Google^{™} Knowledge Graph [5].

According to a further embodiment, step d) comprises generating one or more further proposed requirements based on requirements that were identified as missing from the plurality of requirements during the comparing with the predefined knowledge graph in step c).

That is, advantageously, the existing domain knowledge comprised in the predefined knowledge graph can advantageously also be leveraged to automatically generate requirements that were found to be missing in the acquired plurality of requirements. The operator, or e.g. an expert system or an Al system trained for the task is not only made aware of problems in the plurality of requirements, but may also be proposed a knowledge-based solution of how to fix these problems. As such, the design process is simplified.

An automatically generated requirement may at least comprise a requirement template of things that need to be specified and that need to be completed (edited) to become fully specified requirements. However, an automatically generated requirement may also be fully specified, based on industry default values or other knowledge that is contained in the predefined knowledge graph.

According to a further embodiment, step d) comprises ranking and optionally filtering the generated number of proposed further requirements and outputting the number of proposed further requirements associated with a ranking score.

Thus, the operator (or an according program) is provided with guidance as to which of the proposed further requirements are the most relevant ones.

The ranking may be performed based on a degree of certainty, a degree of matching with a pre-existing knowledge graph, or the like supplied by the method steps or device that were used to generate the proposed further requirements.

According to a further embodiment, step d) comprises using a trained artificial intelligence model to perform the ranking and/or the filtering and/or the generating of at least some of the proposed further requirements.

Thus, advantageously, AI may be leveraged to provide a ranking of the plurality of proposed further requirements based on artificial insight.

More particularly, reinforcement learning may be a suitable training technique than can teach an artificial intelligence model how the ranking should be performed.

That is, the training of the artificial intelligence model may be performed "on the fly" during repetitive executions of the proposed method, so that the method can take the acceptance or denial of proposed requirements (by the operator or the like) into account and can provide ever better recommendations (rankings and/or proposed further requirements) over time.

According to a further embodiment, clearing the plurality of requirements for use in subsequent design and manufacturing in step fj comprises attaching a cryptographic digital signature to the plurality of requirements.

Use of cryptographic digital signatures advantageously improves trust and security against manipulation.

The cryptographic digital signature may be created and attached to the amended plurality of requirements using a private key of a trusted device that performs the proposed method, and a control device of the manufacturing plant may use a corresponding public key of the trusted device to verify that the plurality of requirements have really been cleared and really correspond to the manufacturing specification.

According to a further embodiment, the technical object is a vehicle, a vessel or an aircraft.

That is, the automotive, maritime and aviation industries are thought to especially benefit from the above-mentioned advantage of the proposed automated method of designing the technical object. This is so because in these industries, a large number of parties, such as OEMs and suppliers and the like, co-operate in the design and manufacturing of a vehicle, vessel or aircraft.

Any embodiment of the first aspect may be combined with any embodiment of the first aspect to obtain another embodiment of the first aspect.]

According to a second aspect, the invention relates to a computer program product comprising a program code for executing the above-described method of designing and/or the above-described method of designing and manufacturing a technical object when run on at least one computer.

A computer program product, such as a computer program means, may be embodied as a memory card, USB stick, CD-ROM, DVD or as a file which may be downloaded from a server in a network. For example, such a file may be provided by transferring the file comprising the computer program product from a wireless communication network.

According to a third aspect, there is proposed a computing device for designing a technical object according to the features of claim 14. The computing device may comprise: a) a first unit configured to acquire a plurality of requirements for the technical object under design; b) a second unit configured to generate a knowledge graph from the acquired plurality of requirements; c) a third unit configured to analyse the generated knowledge graph for completeness and/or consistency; d) a fourth unit configured to generate, based on a result of said analysing, and to output a number of proposed further requirements; e) a fifth unit configured to, if e.g. an operator accepts one or more of the proposed further requirements output by the fourth unit, amend the plurality of requirements with the accepted one or more of the proposed further requirements and repeat at least the functionality of the third unit; f) a sixth unit configured to clear the plurality of requirements for use in subsequent design and manufacturing of the technical object under the condition that the analysing of step c) indicates completeness and/or consistency of the plurality of requirements.

The respective unit may be implemented in hardware and/or in software. If said unit is implemented in hardware, it may be embodied as a device, e.g. as a computer or as a processor or as a part of a system, e.g. a computer system. If said unit is implemented in software it may be embodied as a computer program product, as a function, as a routine, as a program code or as an executable object.

The embodiments and features described with reference to the method of the present invention apply mutatis mutandis to the computing device and to the computer program product of the present invention.

Further possible implementations or alternative solutions of the invention also encompass combinations - that are not explicitly mentioned herein - of features described above or be-low with regard to the embodiments. The person skilled in the art may also add individual or isolated aspects and features to the most basic form of the invention.

Further embodiments, features and advantages of the present invention will become apparent from the subsequent description and dependent claims, taken in conjunction with the accompanying drawings, in which:
Fig. 1 schematically shows a design support apparatus according to a first exemplary embodiment;
Fig. 2 visualizes steps of a method of designing a technical object according to the first exemplary embodiment;
Fig. 3 illustrates an inconsistent and incomplete knowledge graph;
Fig. 4 illustrates a consistent and complete knowledge graph;
Fig. 5 shows a screen for outputting and accepting proposed further requirements:
Fig. 6 schematically shows a system for designing and manufacturing a technical object according to a second exemplary embodiment; and
Fig. 7 visualizes steps of a method of designing and manufacturing a technical object according to the second exemplary embodiment.

In the Figures, like reference numerals designate like or functionally equivalent elements, unless otherwise indicated.

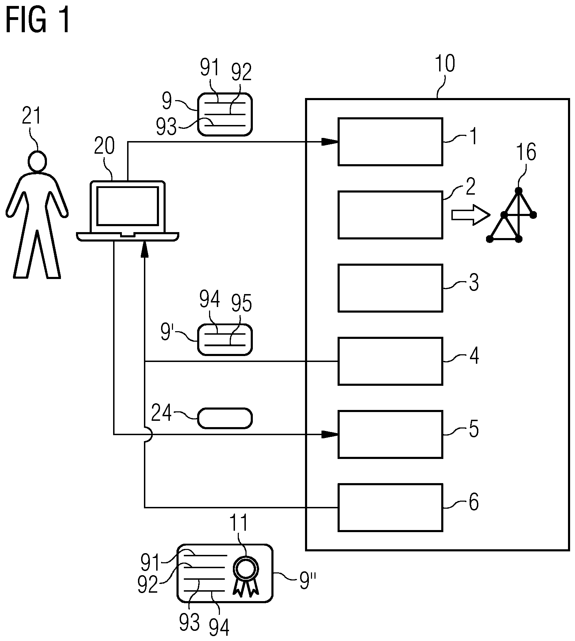

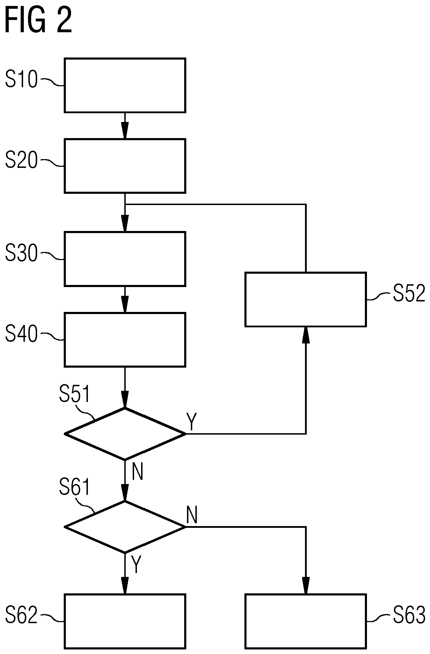

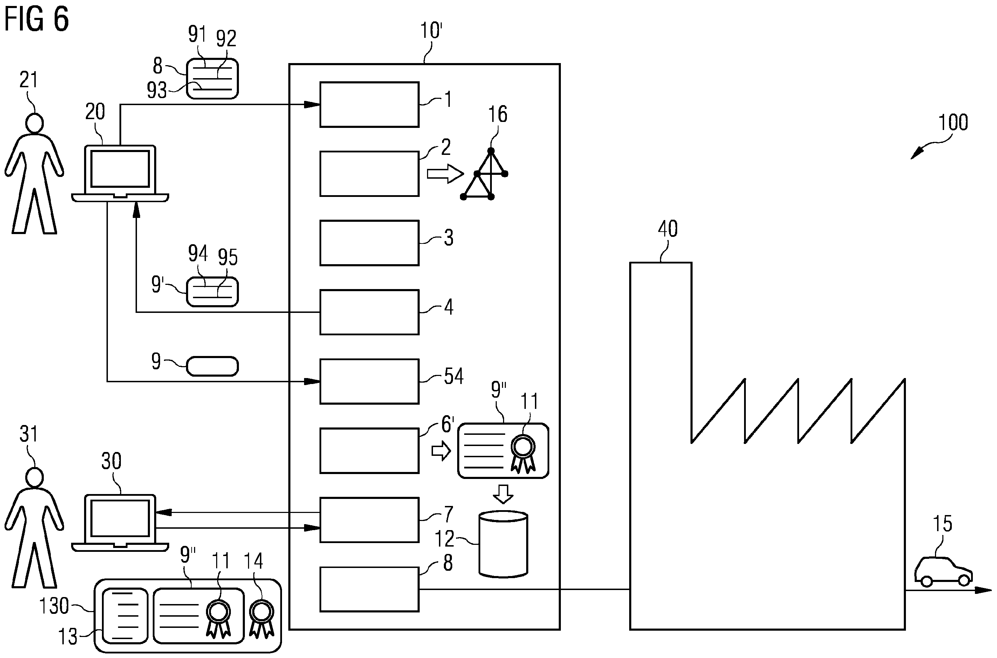

Fig. 1 schematically shows a design support apparatus 10 according to a first exemplary embodiment, and Fig. 2 visualizes steps of a method of designing a technical object (15 in Fig. 6) according to the first exemplary embodiment. Reference will be made to Fig. 1 and Fig. 2.

For example, an operator 21, such as a requirements engineer, uses operator terminal 20 to draft a plurality of requirements 9 that describe requirements to be fulfilled by a technical object that is under design, i.e. that is going to be designed, such as vehicle 15 (Fig. 6). The requirements 9 may relate to customer expectations, regulatory constraints, normative constraints, and technical constrains. It will be understood that in a practical scenario, a plurality of requirements engineers will cooperate and/or that the plurality of requirements 9 may comprise requirements 91, 92, 93 obtained from a plurality of different sources, such as repositories, subcontractors, suppliers, and the like. Merely as an example, requirement 91 may describe a customer expectation, requirement 92 may describe an internal technical requirement, and a further non-shown requirement may come from a supplier. The operator 21 shown in Fig. 1 may then be the lead requirements engineer that integrates all of the requirements 91, 92, 93 supplied by each of the parties and subjects them to the proposed method. Each requirement 91, 92, 93 is drafted in natural language or in a restricted controlled language, and may be structured using XML or a similar markup language. Some simplified examples of requirements 91-93 for a case in which the technical object under design is a car 15 (Fig. 6) include technical requirements such as "the car must have four wheels", "each wheel needs a rim", "the car must have bolts to secure the wheels", may include safety requirements or regulatory requirements such as "the wheels must undergo testing at a speed of 300 km/h", supplier requirements such as "the wheel must be produced by subcontractor A", and the like.

The design support apparatus 10 is an example of the claimed computing device. The design support apparatus 10 comprises a first unit 1, a second unit 2, a third unit 3, a fourth unit 4, a fifth unit 5 and a sixth unit 6. The first unit 1 is a functional unit embodying functionality of method step S10. The second unit 2 is a functional unit embodying functionality of method step S20. The third unit 3 is a functional unit embodying functionality of method step S30. The fourth unit 4 is a functional unit embodying functionality of method step S40. The fifth unit 5 is a functional unit embodying functionality of method steps S51, S52. The sixth unit 6 is a functional unit embodying functionality of method steps S61, S62, S53. Each of units 1-6 may be embodied in hardware or in software. The units 1-6 may exchange data by using shared memory, a bus, wiring, or the like.

In step S10 of the method of the first exemplary embodiment, a first unit 1 of the design support apparatus 10 acquires the plurality of requirements 9 from the operator terminal 20.

In step S20, a second unit 2 of the design support apparatus 10 generates a knowledge graph 16 from the acquired plurality of requirements 91-93, making recourse, for example, to the techniques for knowledge graph construction from reference [2]. Herein, for example, recourse may be taken to an NLP parser that can be used to parse the plurality of requirements 9.

In step S30, a third unit 3 of the design support apparatus 20 analyses the generated knowledge graph 16 for completeness and/or consistency.

Some preferred examples of what may be analysed and how are now described.

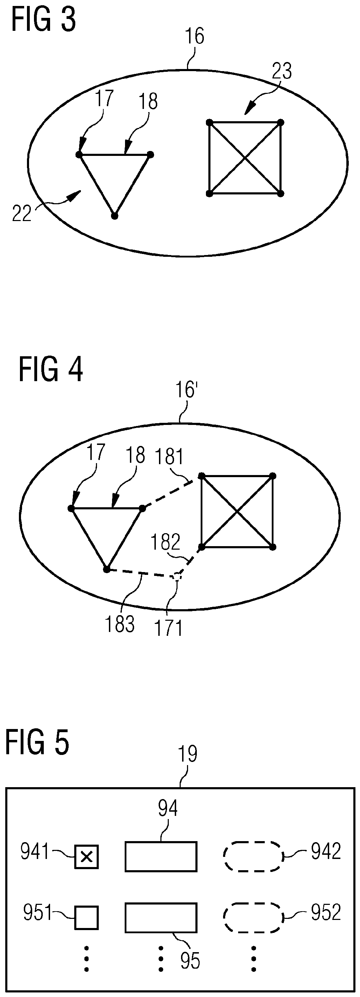

Fig. 3 illustrates an inconsistent and incomplete knowledge graph 16. The knowledge graph 16 comprises a number of nodes 17. Each node represents a part of the technical under design and the required attributes thereof. The knowledge graph 16 also comprises a number of links 18 between the nodes 17. The links 18 indicate dependencies between the requirements expressed by the nodes 17, e.g. "requirement A depends on requirement A also being fulfilled".

As can be seen in Fig. 3, and with further reference also to Fig. 1 and Fig. 2, the knowledge graph 16 comprises two independent clusters 22 and 23. This means that some requirements 9 are not referenced by other requirements 9 and stand alone for some reason that should be checked by a requirements engineer. For example, a first subcontractor may have delivered a consistent set of requirements for a first subsystem of the technical object under design 15 (Fig. 6), and a second subcontractor may have delivered a consistent set of requirements for a second subsystem of the technical object under design 15 (Fig. 6), but a requirements engineer may have failed to specify superordinate requirements for the technical object under design 15 ( Fig. 6) that link the technical object under design 15 (Fig. 6) to the first subsystem and the second subsystem. A plurality of requirements 9 that leads to a clustered knowledge graph 16 that comprises a plurality of independent clusters 21, 22 is an inconsistent plurality of requirements 9. Such a situation of inconsistency could lead to problems during later manufacturing of the technical object under design 15 (Fig. 6), such as the technical object under design 15 (Fig. 6) not meeting customer expectations, not conforming to regulatory constraints, or may even cause malfunctions of the manufacturing process or of the technical object under design 15 (Fig. 6).

That is, in a variant of the first exemplary embodiment in which the third unit 3 analyses the knowledge graph 16 for consistency, a cluster analysis may be performed. Further consistency analysis is also conceived, such as checking for sparsely connected nodes and the like.

Although not visible from Fig. 4, the knowledge graph 16 may also be incomplete. An incomplete plurality of requirements 9 may not comprise some requirements for which domain knowledge indicates that they should be present. A very simple example is if one requirement 9 indicates that "the car must have four wheels", but there is no requirement as to how the wheels are fixed to the car, i.e., a requirement that "the wheel needs a rim" and a requirement that "the car must have bolts to secure the wheels" may be missing. Such a situation of incompleteness could lead to problems during later manufacturing of the technical object under design 15 (Fig. 6), such as the technical object under design 15 (Fig. 6) not meeting customer expectations, not conforming to regulatory constraints, or may even cause malfunctions of the manufacturing process or of the technical object under design 15 (Fig. 6).

Completeness of the knowledge graph 16 may be checked by comparing the knowledge graph 16 with a predefined knowledge graph (not visualized) that captures domain-specific knowledge. The predefined knowledge graph may be a company-wide knowledge graph of a manufacturing company. The predefined knowledge graph may contain information about a domain ontology or a domain taxonomy. The predefined knowledge graph may also be a universal knowledge graph or a public knowledge graph such as the Google^{™} Knowledge Graph [5].

That is, in a variant of the first exemplary embodiment in which the third unit 3 analyses the generated knowledge graph 16 for completeness, the third unit 3 may compare the generated knowledge graph 16 with a predefined knowledge graph so as to identify missing requirements.

Merely as an example, the third unit 3 may check if any given semantic asset (node in the respective knowledge graph having certain attributes) normally (i.e. in the predefined knowledge graph) references another semantic asset, but the corresponding node 17 in the generated knowledge graph 16 does not reference a corresponding further node 17. Such checks can be performed repeatedly or even recursively, until a search yields no more new aspects, searching for missing aspects or even chains of missing aspects.

Fig. 4 illustrates a consistent and complete knowledge graph 16'. That is, as a result of performing the above-described completeness and/or consistency checks, the third unit may amend the knowledge graph 16 with amended node(s) 171 and with amended links 191-193 that resolve the incompleteness and/or inconsistency. Herein, the third unit 3 may take recourse to knowledge available in the predefined knowledge draft to find out how to create the amended nodes 171 and links 191-193. The amended nodes 171 and links 191-193 and/or the amended knowledge graph 16' may be said to constitute a result of the analysis performed in step S30, and may be said to constitute indications of requirements that were identified as missing from the plurality of requirements 9.

It is noted that a case is conceivable in which the third unit 3 finds that the knowledge graph 16 is consistent and complete. In this case, no further nodes 171 and links 191-193 are generated, and the below-described steps S40 and S50 are omitted, and execution proceeds directly with step S61.

With further reference to Fig. 1, Fig. 2 and Fig.6, in step S40, based on the results of the completeness and/or consistency analysis performed in step S30, and more particularly, based on requirements that were identified as missing from the plurality of requirements 9 during the comparing with the predefined knowledge graph in step S30, a fourth unit 4 of the design support apparatus 10 generates a number of proposed requirements 9', 94, 95 and outputs the generated number of proposed requirements 9' to the operator terminal 20. Natural language synthesis or a trained large language model can be used to transform the amended nodes 171 and links 191-193 into proposed requirements 94, 95 that are written in natural language or controlled language. The operator 21 can then review the proposed requirements 9' on the operator terminal 20.

It is noted that generating the proposed further requirements 9' based on information from the predefined knowledge graph is merely an example, and the proposed further requirements 9' may also be generated by a trained artificial intelligence or a trained large language model in response to inputting the plurality of acquired requirements 9 and asking for completion.

Fig. 5 shows a screen 19 for outputting and accepting proposed further requirements 94, 95. Reference is made to Figs. 1, 2 and 5.

The screen 19 may be displayed on a display of operator terminal 20. The screen and its contents may be generated by an application on operator terminal 20 based on the proposed further requirements 94, 95. Alternatively, the screen 19 may be generated by a web browser of the operator terminal 20 while the contents of the screen may be generated by the fourth unit 4 and may be transmitted to the operator terminal 20 along with the proposed further requirements 9'.

That is, the operator 21 is shown screen 19 which comprises a plurality of rows. Each row shows a respective proposed further requirement 94, 95. Each row further has a checkbox 941, 951 which can be checked or unchecked to indicate acceptance or rejection of the respective proposed further requirement 94, 95. It is noted that the proposed further requirements 94, 95 may merely be displayed as text on the screen 19. In some variants, the proposed further requirements 94, 95 may also be displayed inside edit boxes so that the operator 21 can review and edit the proposed further requirements 94, 95 before accepting them.

According to one proposed further development of the first exemplary embodiment, screen 19 may also display, in each row, a ranking score 942, 952 for each proposed further requirement 94, 95. The ranking score may be an ordinal number, such as 1, 2, 3, ... indicating the order of relevance of the proposed further requirements 94, 95, or may be a percentage or fraction that indicates a likelihood of the respective further requirement 94, 95 being relevant, or the like. The rows on screen 19 may be displayed in a sorted manner sorted by ranking scores 942, 952 in order of decreasing relevance. In this way, the operator 21 is advantageously guided by the design support device 10 and it may be possible to streamline and speed up the design process.

According to the proposed further development, the ranking scores 942, 952 may be generated by the fourth unit 4. Optionally, the fourth unit 4 may discard certain proposed further requirement 94, 95 if its ranking score 942, 952 is below a predetermined threshold, thereby filtering the proposed further requirements 9' by relevance. One preferable way of generating the ranking scores 942, 952 may be to use an artificial intelligence model (not visualized) that has been and/or is continuously being trained using reinforcement learning. For example, the fourth unit 4 can continuously train the artificial intelligence model based on the operator 21 accepting or not accepting proposed requirements 94, 95 (which requirements 94, 95 are accepted is known to the fourth unit 4 based on the later described response 24 transmitted to the fifth unit 5). In this way, the ranking scores 942, 952 may improve and become more truthful and useful over time. The ranking scores 942, 952 may then be output by the fourth unit 4 in association with the proposed further requirements 9'.

Optionally, in addition or alternatively to the above, the (an) artificial intelligence model may be subjected to continuous reinforcement training based on combinations of a respective plurality of requirements 9 and the corresponding number of proposed and accepted further requirements 94, 95 and/or the corresponding number of accepted and edited, by the operator 20, further requirements 94, 95. In this way, based on the acceptance indications 941 and edits made by the operator 20, the artificial intelligence model may learn, over time, to propose useful further requirements 94, 95 based on an acquired plurality of requirements 9 that was found to be incomplete or inconsistent. In this variant, the trained artificial intelligence model may be used by the fourth unit 4 for generating at least some of the proposed further requirements 9'.

In the example shown in Fig. 5, proposed further requirement 94 is accepted by operator 21 (Fig. 1) by checking checkbox 941, while checkbox 951 is not checked and requirement 95 is not accepted.

The description of the first exemplary embodiment is continued with reference to Fig.1 and Fig. 2. When the user confirms his choices (acceptance or not, and optionally edits, of each of proposed further requirements 94, 95), for example by hitting a (non-shown) "OK" button, the operator terminal 21 transmit a response 24 to a fifth unit 5 of the design support device 10. The response 24 indicates whether and which of proposed further requirements 94, 95 were accepted, and if editing is allowed, the response 24 may also comprise the edited versions of the accepted ones of the proposed further requirements 94, 95.

In response to receiving response 24, in step S51, the fifth unit 5 of the design support device 10 checks if the operator 21 has accepted at least one of the proposed further requirements 94, 95. If so (Y at S51), the fifth unit 5 continues with step S52.

In step S52, the fifth unit 5 amends the plurality of requirements 9 with the accepted one or more of the proposed further requirements 9' (in the discussed examples, with proposed further requirement 94), amends knowledge graph 16 only with those of nodes 171 and links 182, 193 that correspond to the accepted proposed further requirements 94, and branches back to step S30 to have the third unit 3 check again if the amended knowledge graph 16 now is complete and consistent.

It is noted that in one alternative variant, the fifth unit 5 may only amend the proposed further requirements 9', but may not amend the knowledge graph 16, and may rather branch back to step S20 to have the second unit 2 re-build the knowledge graph 16 from scratch based on the amended plurality of requirements 9.

Resuming now the description of step S51, if the user has accepted none of the proposed further requirements 94, 95 (N in step S51), the fifth unit 5 then branches to step S61.

In step S61, a sixth unit 6 of the design support apparatus 10 confirms whether the analysis performed by the third unit 3 in step S30 of the plurality of requirements 9, as amended if applicable, indicates that the plurality of requirements 9 are complete and/or consistent. Herein, "complete and/or consistent" means that if the third unit S3 checks for both completeness and consistency, then the sixth unit 6 checks whether the plurality of requirements 9 are both complete and consistent. If the third unit 3 checks only for one of completeness and consistency, then the sixth unit 6 also checks only for a corresponding one of completeness and consistency of the plurality of requirements 9, as amended if applicable. If the plurality of requirements 9, as amended if applicable, are determined to be not complete or not concise (N at S61), the sixth unit 6 branches to step S63, and the method ends with failure. On the other hand, if the plurality of requirements 9, as amended if applicable, are determined to be complete and/or concise (Y at S61) , then the sixth unit 6 branches to step S62.

In step S62, the sixth unit 6 clears the plurality of requirements 9, as amended if applicable, for use in subsequent design and manufacturing of the technical object 15 (Fig. 6). To this end, for example, the sixth unit 6 attaches a clearance certification 11 to the (if applicable, amended) plurality of requirements 9. The clearance certification 11 may comprise a digital signature, such as a digital signature created using a trusted private key of the design support apparatus 10. The combination of the plurality of requirements 9, as amended if applicable, and the clearance certification 11 will be referred to as cleared plurality of requirements 9".

According to the first exemplary embodiment, the sixth unit 6 then outputs the cleared plurality of requirements 9" to the operator terminal 20. Thus, the operator 21 obtains the cleared plurality of requirements 9". Thanks to the clearance certification 11, any entity, such as the operator, a design engineer, a manufacturing plant, or the like, that checks the clearance certification 11 can be sure that the cleared plurality of requirements 9" are consistent and complete and cleared for design and manufacturing.

In this way, by basing further design and manufacturing on the cleared plurality of requirements 9", technical problems may advantageously avoided, such as for example problems of non-conformance with client expectations or regulatory constraints, or manufacturing of a malfunctioning technical object, or failure of manufacturing, which could occur during later manufacturing of the technical object 15 (Fig. 6) based on requirements which were not cleared according to the proposed method.

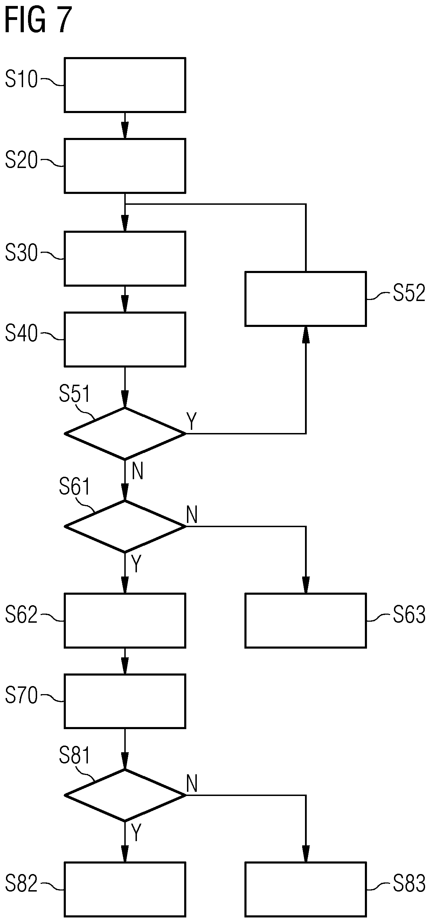

Fig. 6 schematically shows a system 100 for designing and manufacturing a technical object 15 according to a second exemplary embodiment; and Fig. 7 visualizes steps of a method of designing and manufacturing the technical object 15 according to the second exemplary embodiment.

The second exemplary embodiment is based on the first exemplary embodiment and/or any of the variants or further developments of the first exemplary embodiment described hereinabove. The following description of the second exemplary embodiment made with reference to Fig. 6 and Fig. 7 will focus on the differences between the second and the first exemplary embodiment and in particular to the additional features of the second exemplary embodiment.

The design and manufacturing system 100 of the second exemplary embodiment comprises a design support apparatus 10' that is similar to the design support apparatus 10 (Fig. 1) of the first exemplary embodiment and has first to fourth units 4 that are the same as the first to fifth units 5 of the design support apparatus 10 (Fig. 1) of the first exemplary embodiment. The sixth unit 6' and a seventh unit 7 and an eighth unit 8, which are functional units corresponding to method steps S61-S63; S70; and S81-S83, respectively, will be described later.

The design and manufacturing system 100 further comprises a plant 40 that comprises non-shown programmable feeders, robots and other machinery that is adapted to manufacture a car 15 (example of a technical object under design) according to instructions comprised in a manufacturing specification 13.

A design and manufacturing method for manufacturing the car 15 will now be described with reference to Fig. 6 and Fig. 7.

In a requirements engineering phase of the design and manufacturing method, a cleared plurality of requirements 9" pertaining to the car 15 under design is obtained by executing steps S10 to S62 using the functionality of the first to sixth units 1-5, 6' of the design support apparatus 10'. These steps and functionality are the same or similar to the corresponding steps and functionality described for the first exemplary embodiment or any of its variants and further developments. That is, the cleared plurality of requirements 9" obtained as a result of executing step S62 is advantageously determined to be complete and consistent. However, the sixth unit 6' differs from the sixth unit 6 (Fig. 1) of the first exemplary embodiment in that the sixth unit 6' of the second exemplary embodiment stores the cleared plurality of requirements 9" in a design support database 12 of the design support apparatus 10'.

Then, in a design phase of the design and manufacturing method, a design engineer 31 uses an engineering terminal 31 to access the design support database 12 and obtain the cleared plurality of requirements 9" therefrom. The engineer 31 may use the clearance certification 11 comprised in the cleared plurality of requirements 9" to make sure that the requirements 9" are complete and consistent. Based on the obtained cleared plurality of requirements 9", the engineer 31 creates a manufacturing specification 13 for the car 15 under design that meets the requirements 9". When the design phase is finished, the engineer 31 then creates a certified manufacturing specification 130 that comprises the created manufacturing specification 13, comprises the cleared plurality of requirements 9" based on which the engineer 31 has created the manufacturing specification 13, and comprises an engineering certification 14 with which the design engineer 31 certifies that he has created the manufacturing specification 13 based on the cleared plurality of requirements 9" comprised in the certified manufacturing specification 130. Similar to the clearance certification 11, the engineering certification 14 may be a digital signature created with a trusted private key owned by the design engineer 31.

It will be understood that a plurality of teams of engineers, possibly working for different organizations, such as OEMs and suppliers and the like, can cooperate to create the manufacturing specification 13. In this case, the design engineer who owns the private key may be a lead design engineer who is trusted and who oversees how the various contributions of the various engineering teams are compiled to form the manufacturing specification 13.

In step S70, the seventh unit 7 of the design support apparatus 10' acquires the certified manufacturing specification 130 of the car 15 that has been created based on the cleared plurality of requirements 9" from the engineering terminal 30.

In step S81, the eighth unit 8 of the design support apparatus 10' checks whether the plurality of requirements 9" comprised in the certified manufacturing specification 130 have been cleared for use in manufacturing of the car 15. That is, the eighth unit 8 determines whether the engineering certification 14 is valid and determines whether the clearance certification 11 is valid. In the example in which certifications 11, 14, are digital signatures, the eighth unit 8 may use a public key of the design support apparatus 10' and of the engineer 31, respectively, to make said determinations. If both certifications 14, 11 are valid (Y in step S81), the method continues with step S82. On the other hand, if one of the certifications 11, 14 is invalid, the method continues with step S83 and ends with failure, such that the car 15 will not be produced.

However, if all certifications 11, 14 are valid, in step S82, the eighth unit 8 causes the plant 40 to operate so as to manufacture the car 15 according to instructions comprised in the manufacturing specification 13.

Therein, in one variant, the eight unit 8 processes the instructions comprised in the manufacturing specification 13 and controls the plant 40 and its machinery to manufacture the car 15. In this example, the design support apparatus 10' also fulfils the functions of a manufacturing controller and may also be called a design and manufacturing support apparatus.

In another variant, the eight unit 8 transmits the certified manufacturing specification 130, optionally with a further, non-shown clearance-for-manufacturing certification attached thereto, to the plant 40. An automated controller or a human operator of the plant 40 obtains the certified manufacturing specification 130, may optionally verify the certifications, such as the clearance certification 11, the engineering certification 14, and/or the clearance-for-manufacturing certification comprised therein, and may then cause the plant 40 and its machinery to operate and to manufacture the car 15 according to the manufacturing specification 13.

According to the second exemplary embodiment, due to the checks implemented in steps S61 and S81, a car 15 that was designed based on requirements 9 that were not checked to be complete and consistent is prevented from being manufactured. Thus, issues such as the car not complying to customer expectations, regulatory constraints, the car having malfunctions or quality issues or the manufacturing process failing, and the like, can be prevented.

It is noted that following the proposed method ending in failure, an operator 21 (requirements engineer) or a design engineer 31 may be alerted to the missing completeness and/or consistency certification of the requirements and may then intervene to make the necessary adjustment, such as subject all requirements to the analysis of step S30 and using only cleared requirements 9" in the further design and manufacturing phases.

Although the present invention has been described in accordance with preferred embodiments, it is obvious for the person skilled in the art that modifications are possible in all embodiments.

As a technical object 15 under design and/or a manufactured technical object 15, a car was discussed. However, the proposed solution applies so any technical object under design, and is particularly useful not only for the design and manufacturing of cars and vehicles, but also for the design and manufacturing of vessels or aircrafts.

In the described embodiments, a binary decision was made whether a given plurality of requirements (as amended, if applicable) is consistent or not and/or is complete or not. However, it is also conceivable to make gradual decisions. That is, a degree of consistency and/or a degree of compliance may be calculated, and the case of a plurality of requirements being "complete" and/or "consistent" may also comprise a case where the plurality of requirements are not entirely complete and/or consistent, but in which a degree of completeness and/or consistence is at least above a certain predetermined threshold.

Digital signatures have been discussed as one way to provide the clearance certification 11 and/or the engineering certification 14. However, the skilled person will realize that the act of clearing a plurality of requirements for further design and manufacturing and/or the act of certifying that manufacturing instructions are based on a certain plurality of requirements 9" can be understood as transactions, and these transactions may be recorded in an immutable transactional ledger, such as in a private or public blockchain. If the transactional ledger contains a plurality of requirements 9" that was posted by a ledger participant identity associated with the design support apparatus 10, any party, such as the plant 40, can at all times be sure that this plurality of requirements 9" was properly cleared for design and manufacturing. Likewise, if the manufacturing specification 13 is posted to the ledger, refers to the plurality of requirements 9" that are posted to the ledger, and was posted by a ledger ID associated with a trusted design engineer or other trusted party, any party, such as the plant 40, can at all times be sure that these manufacturing specifications 13 are indeed based on the cleared plurality of requirement 9"

As yet another alternative, if there is trust in the good will of all parties involved in the requirements engineering, design engineering and manufacturing process, no cryptography may be used, and the clearance certification 11 and/or the engineering certification 14 may be plain indicators, such as flags, human-and/or machine-readable statements or the like.

A single operator 21 and a single engineer 31 with corresponding terminals 20, 30 were mentioned for ease of understanding. However, crucially, the benefits of the proposed method will be better appreciated in the following variant: The operator 21 may comprise a plurality of requirements engineers 21 working for different organizations, such as a requirements engineering team of a car manufacturer, and requirements engineering teams of different OEMs. Likewise, the engineer 31 may comprise a plurality of design engineers 31 working for different organizations.

In connection with this, it is also conceivable to embody the design support apparatus 10 not as a singular computing device 10, but as a plurality of computing devices and/or as a cloud service. In this case, the cloud service is to be considered an embodiment of the claimed computing device.

### Literature

[1] Bonner, Maria et al. "Automated Traceability between Requirements and Model-Based Design", REFSQ Workshops (2023)
[2] Lingfeng Zhong, "A Comprehensive Survey on Automatic Knowledge Graph Construction"
[3] Wanye Xin, Zaho, et al., "A Survey of Large Language Models", arXiv:2303.18223
[4] Yuqi Zhu et al., "LLMs for Knowledge Graph Construction and Reasoning: Recent Capabilities and Future Opportunities", arXiv:2305.13168
[5] Google Knowledge Graph: https://en.wikipedia.org/wiki/Google_Knowledge Graph

## Claims

1. A computer-implemented method of designing a technical object (15), the method comprising:
a) acquiring (S10) a plurality of requirements (9) for the technical object (15) under design;
b) generating (S20) a knowledge graph (16) from the acquired plurality of requirements (9);
c) analysing (S30) the generated knowledge graph (16) for completeness and/or consistency;
d) based on a result of said analysing in step c), generating (S40) and outputting a number of proposed further requirements (9');
e) if the one or more of the proposed further requirements (9') output in step d) are accepted, amending (S52) the plurality of requirements (8) with the accepted one or more of the proposed further requirements (9') and repeating at least step c); and
f) clearing (S62) the plurality of requirements (9") for use in subsequent design and manufacturing of the technical object (15) under the condition that the analysing of step c) indicates completeness and/or consistency of the plurality of requirements (9").

2. The method of claim 1, further comprising:
g) acquiring a manufacturing specification (130) of the technical object (15) that has been created based on the plurality of requirements (9");
h) operating a plant (40) to manufacture the technical object (15) according to the manufacturing specification (130) only if the plurality of requirements (9") have been cleared for use in step f).

3. The method of claim 1 or 2,
wherein the requirements (9) comprise one or more of natural language, controlled language, and markup language.

4. The method of any one of claims 1 to 3,
wherein step b) comprises parsing the requirements (9) using an NLP parser.

5. The method of any one of claims 1 to 4,
wherein step b) comprises using a trained large language model to generate the knowledge graph (16) from the plurality of requirements (9).

6. The method of any one of claims 1 to 5,
wherein step c) comprises checking consistency of the generated knowledge graph (16) by checking whether the generated knowledge graph (16) comprises a single cluster or a plurality of independent clusters (22, 23).

7. The method of any one of claims 1 to 6,
wherein step c) comprises checking completeness of the generated knowledge graph (16) by comparing the generated knowledge graph (16) with a predefined knowledge graph.

8. The method of claim 7,
wherein step d) comprises generating one or more further proposed requirements (9', 94, 95), based on requirements that were identified as missing from the plurality of requirements (9) during the comparing with the predefined knowledge graph in step c).

9. The method of claim 7 or 8,
wherein step d) comprises ranking and optionally filtering the generated number of proposed further requirements (9') and outputting the number of proposed further requirements (9) associated with a ranking score (942, 952).

10. The method of any one of claims 7 to 9,
wherein step d) comprises using a trained artificial intelligence model to perform the ranking and/or the filtering and/or the generating of at least some of the proposed further requirements (9').

11. The method of any one of claims 1 to 10,
wherein clearing the plurality of requirements (9") for use in subsequent design and manufacturing in step fj comprises attaching a cryptographic digital signature (11) to the plurality of requirements (9").

12. The method of any one of claims 1 to 11,
wherein the technical object (15) is a vehicle, a vessel or an aircraft.

13. A computer program product comprising a program code for executing the method of any one of claims 1 to 12 when run on at least one computer.

14. A computing device (10) for designing a technical object (15), the computing device (10) comprising:
a) a first unit (1) configured to acquire a plurality of requirements (9) for the technical object (15) under design;
b) a second unit (2) configured to generate a knowledge graph (16) from the acquired plurality of requirements (9);
c) a third unit (3) configured to analyse the generated knowledge graph (16) for completeness and/or consistency;
d) a fourth unit (4) configured to generate, based on a result of said analysing, and to output a number of proposed further requirements (9);
e) a fifth unit (5) configured to, if the one or more of the proposed further requirements (9') output by the fourth unit (4) are accepted, amend the plurality of requirements (9) with the accepted one or more of the proposed further requirements (9') and repeat at least the functionality of the third unit (3); and
f) a sixth unit (6) configured to clear the plurality of requirements (9") for use in subsequent design and manufacturing of the technical object (15) under the condition that the analysing of the third unit (3) indicates completeness and/or consistency of the plurality of requirements (9").

15. The computing device (10') of claim 14, further comprising:
g) a seventh unit (7) configured to acquire a manufacturing specification (130) of the technical object (15) that has been created based on the plurality of requirements (9"); and
h) an eight unit (8) configured to operate a plant (40) to manufacture the technical object (15) according to the manufacturing specification (130) only if the plurality of requirements (9") have been cleared for use by the sixth unit (6).
